# EUROPEAN PATENT SPECIFICATION

(11) **EP 0 577 774 B1**
(45) Date of publication and mention of the grant of the patent: **27.11.1996**
(21) Application number: 92912047.5
(22) Date of filing: 25.03.1992
(51) Int. Cl.: H01R 25/00, H01R 27/02, H01R 31/00, H01R 4/60

(54) **PRE-BUSSED RIGID CONDUIT**
VORKANALISIERTE STARRE RÖHRE
CONDUIT ELECTRIQUE RIGIDE PREALABLEMENT CANALISE

(30) Priority: 26.03.1991 US 675389
(43) Date of publication of application: 12.01.1994
(73) Proprietor: SQUARE D COMPANY, Palatine, Illinois 60067 (US)
(72) Inventor: WHITNEY, Robert, I., Brookville, IN 47012 (US); SIMMERING, Lisa, C., South Carolina 29643 (US); O'NAN, Glenn, S., Hamilton, OH 45013 (US)
(74) Representative: Sorrell, Terence Gordon
(86) International application number: US9202351
(87) International publication number: WO9217922

(56) References cited:
- US-A- 2 175 144
- US-A- 2 293 911
- US-A- 3 871 734
- US-A- 4 154 302
- US-A- 4 420 210

## Description

### FIELD OF THE INVENTION

The technical field to which this invention pertains is electrical distribution feeder systems for use in industrial and commercial locations.

### BACKGROUND OF THE INVENTION

In the past, industrial and commercial electrical distribution feeder systems have generally employed cable and conduit, cable and cable tray, cable and wireway, or electrical busway. Where cable is used with conduit, the conduit must first be installed and then cables are pulled through it to complete the installation. Cable used with cable tray or wireway again involves the installation of the cable tray or wireway first and then laying of cables in the tray or wireway to complete the installation. Busway installations are generally simpler than cable and conduit or cable and tray or wireway since the conductors are already inside the protective enclosure and require no additional labor after the enclosure is installed. Busway designs of the past have generally included a number of bus bars having a rectangularly-shaped cross-section placed parallel to one another in a common plane and installed in a rectangularly shaped enclosure. The sections of busway are produced in specific lengths which can not be altered in the field during installation. For this reason, if special lengths are required they must be engineered and manufactured at the factory. This special engineering and manufacturing requires additional time for shipment to the job site and generally an increase in cost to the customer.

US-A-3,871,734 discloses an electrically conducting tubular assembly comprsing a number of sections which can be arranged end to end, with a male connector at one end and a female connector at the other end, for extending downwardly in an oil well bore hole.

US-A-4,154,302 discloses a cable feed-through apparatus and method for wellheads including a unitary shell having a plurality of knock-down components therein including spaced conductors for coupling to electric feed cables.

The present invention provides an alternative to cable and conduit, cable and tray, and busway designs for electrical feeder systems, particularly in the ampacity range of approximately 60 to 800 amperes.

According to the present invention, there is provided a sectionalized electrical distribution feeder system comprising a plurality of sections of pre-bussed conduit field-alterable by cutting the section across its length in order to join it with an additional section of the same construction; each section comprising in combination: a substantially rigid generally cylindrical tubular enclosure extending along a longitudinal axis between a first end region and a second end region, said enclosure having a uniform cross-section along its extent; a plurality of substantially rigid electrical conductors within said enclosure, said plurality of rigid conductors extending from said first end region of said enclosure to said second end region of said enclosure; each of said plurality of rigid conductors having a uniform cross-section along its extent; a plurality of support members for supporting said plurality of conductors within said enclosure intermediate the ends thereof in alignment with said longitudinal axis, said support members separating said plurality of rigid conductors one from the other and from said enclosure; one of said plurality of support members comprising an end plug disposed in said substantially rigid enclosure adjacent to said first end region with each said plurality of rigid conductors extending from said end plug in said first end region; another of said plurality of support members comprising an end plug disposed in said substantially rigid enclosure adjacent to said second end region with each of said plurality of rigid conductors extending from said end plug in said second end region; said plurality of rigid conductors forming a pattern that is uniform in cross-section along the length of said section so that said plurality of rigid conductors form a pattern of connectors on each end of said section and form the same pattern of connectors if said section is field-altered by cutting the section across its length, and at least one joint connecting member made from an electrically insulating material having a generally cylindrical shape for cooperative engagement with the enclosures of the two ends of two adjacent sections said joint connecting member(s) housing a plurality of electrical connectors for providing electrical connection between the respective rigid electrical conductors of said two adjacent sections.

The pre-bussed rigid conduit sectionalized electrical distribution system of the present invention is a combination of both conduit and bus way. However, the system of the present invention has significant advantages over the prior art systems from which it was derived, particularly in the ampacity range of 60 to 800 amperes.

One advantage of the electrical distribution system of present invention is that the positioning of the conductors in the cylindrical enclosure permits a generally smaller and stronger enclosure than that usually employed in busway devices of the same current carrying capacity. The pre-bussed rigid conduit enclosure of the present invention is also generally smaller than that required for cable and conduit of the same current capacity.

Another advantage of the pre-bussed rigid conduit of the present invention is that it can be manufactured in specific lengths to facilitate easy handling and installation; however, unlike prior art busway systems, the pre-bussed rigid conduit of the present invention can be easily field modified with hand tools to lengths as short as 4 inches.

Yet another advantage of the present invention is that the enclosure can also provide a water resistant environment for the electrical conductors enclosed therein when assembled with standard waterproof electrical conduit fittings.

Other features and advantages of the invention will become apparent to those skilled in the art upon review of the following detailed description, claims and drawings.

### BRIEF DESCRIPTION OF THE DRAWINGS

FIG. 1 is an isometric exploded view of two adjoining sections of the pre-bussed rigid conduit of the present invention.

FIG. 2 is an isometric cut-away view of a section of the pre-bussed rigid conduit of the present invention.

FIG. 3 is an isometric partial cross section view of an insulating support member for supporting the conductors within the enclosure of a pre-bussed rigid conduit system constructed in accordance with the present invention.

FIG. 4 is a partial cross section view of a joint connecting member for connecting two adjoining sections of pre-bussed rigid conduit constructed in accordance with the present invention.

FIG. 5 is an isometric view of an electrical connector, normally disposed within the joint connecting member illustrated in FIG. 4, for facilitating electrical contact between corresponding conductors of two adjacent sections of pre-bussed rigid conduit constructed in accordance with the present.

FIG. 6 is an isometric view of an alternate construction of the pre-bussed conduit of the present invention in which the electrical conductors are hollow.

FIG. 7 is a cross sectional view of a joint connecting member for connecting two adjoining sections of pre-bussed rigid conduit constructed in accordance with the alternate construction of the present invention shown in FIG. 6, i.e. in which the electrical conductors are hollow.

FIG. 8 is a cross sectional view of an alternate construction for a joint connecting member for connecting two adjoining sections of pre-bussed rigid conduit constructed in accordance with the alternate construction of the present invention shown in FIG. 6, i.e. in which the electrical conductors are hollow. FIG. 9 is an exploded view of a joint connecting member constructed in accordance with one embodiment of the present invention.

FIG. 10 is a cross-sectional view of one section of the joint connecting member illustrated in FIG. 9.

FIG. 11 is an end view of one section of the joint connecting member illustrated in FIG. 9.

Before one embodiment of the invention is explained in detail, it is to be understood that the invention is not limited in its application to the details of construction in the following description or illustrated in the drawings. The invention is capable of other embodiments and of being practiced or being carried out in various other ways. Also, it is to be understood that the phraseology and terminology used herein is for the purpose of description and should not be regarded as limiting.

### DESCRIPTION OF THE PREFERRED EMBODIMENT

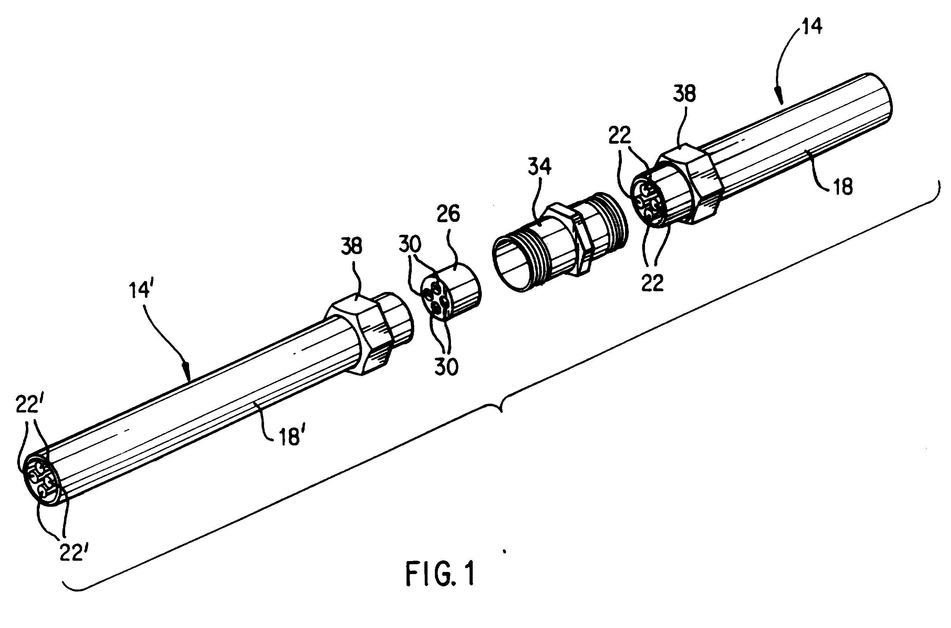

FIG. 1 illustrates one preferred embodiment of the pre-bussed rigid conduit sectionalized electrical distribution feeder system of the present invention. A first section 14 of pre-bussed rigid conduit includes an enclosure 18 and a plurality of electrical conductors 22. A second section 14' includes an enclosure 18' and a plurality of electrical conductors 22'. A joint connecting member 26 housing a number of substantially tubular electrical connectors 30 electrically connects the conductors 22 of the first section 14 with the conductors 22' of the second section 14'. A joint cover 34 and a pair of nuts 38 physically connect the enclosure 18 of the first section 14 to the enclosure 18' of the second section 14'. In the preferred embodiment, the enclosures 18 and 18' are constructed of metal, such as conventional metallic electrical conduit, and the joint cover 34 and nuts 38 comprise conventional electrical conduit fittings.

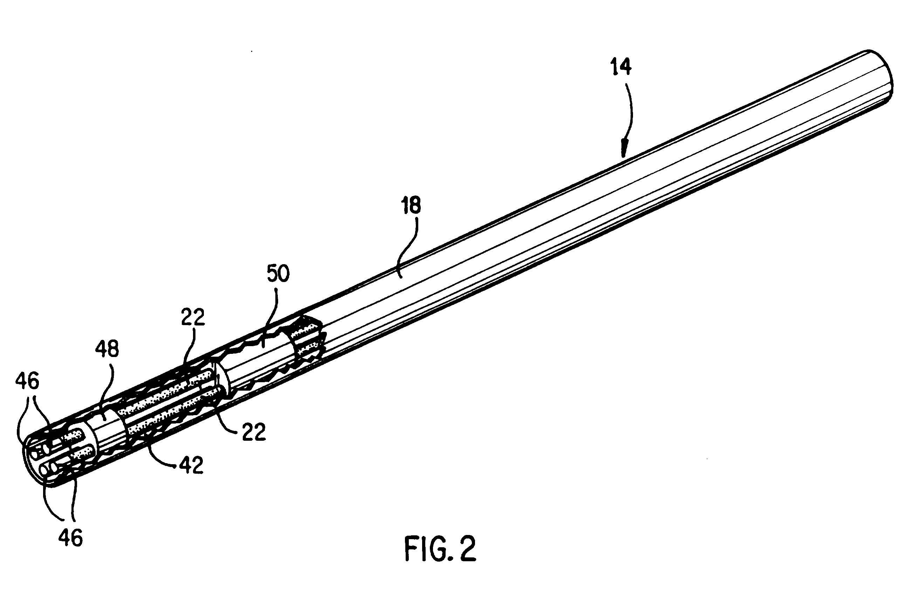

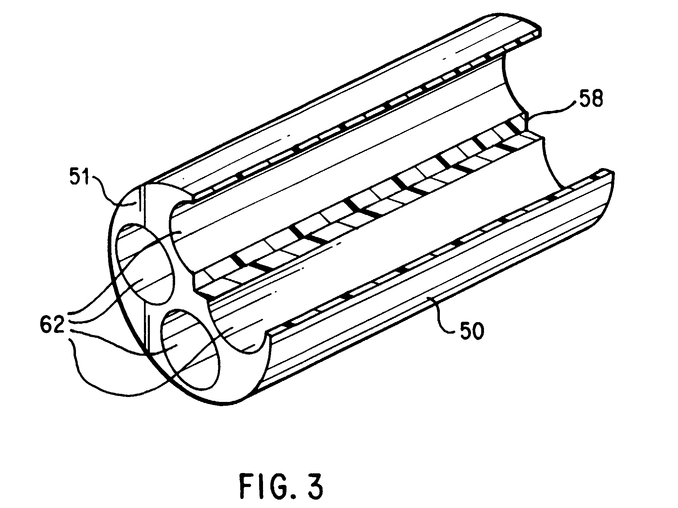

FIG. 2 illustrates the construction of a section 14 of a preferred embodiment of the pre-bussed rigid conduit of the present invention. Each conductor 22 is enclosed in an electrically insulating sheath 42. A portion of the sheath 42 is removed at each end 46 of the conductors 22 to provide an electrical contact surface. An end plug 48, made of electrically insulating material, such as a polymeric or thermoplastic material, is provided at each end of the section 14. The end plugs 48 are pressed into the enclosure 18 and fit tightly around the conductors 22 and within the enclosure 18, thereby sealing the enclosure 18. One or more support members 50, also made of an electrically insulating material, such as a polymeric or thermoplastic material, can be positioned at spaced apart intervals inside the enclosure 18 to support and maintain the physical and, more importantly, the electrical spacing of the conductors 22 inside the enclosure 18. The support members 50 fit snugly around the conductors 22 and easily slide inside the enclosure 18. Referring to FIG. 3, each support member 50 is generally cylindrical in shape and has a first end 54 and a second end 58. A number of passageways 62 run longitudinally through the support member 50 connecting the first end 54 with the second end 58. These passageways are dimensioned to tightly receive the electrical conductors 22.

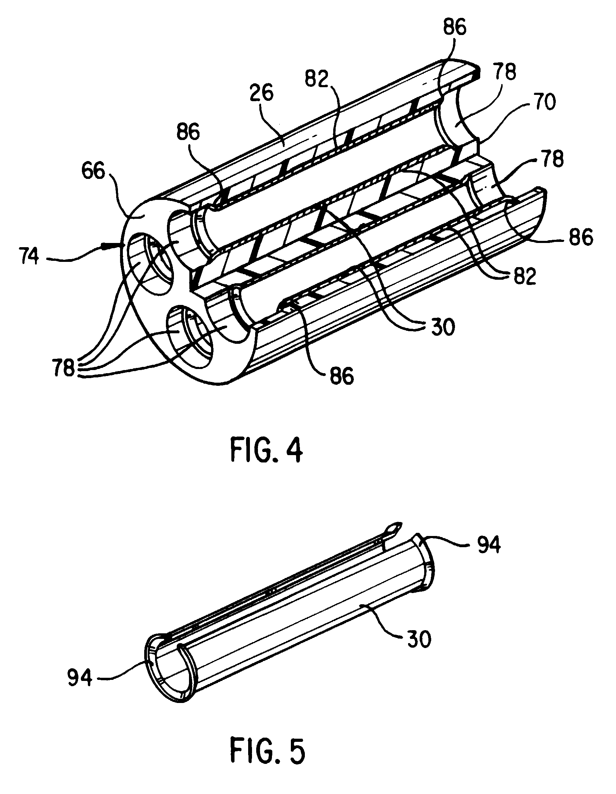

Means for connecting adjacent sections, such as 14 and 14' shown in FIG. 1, at one of their ends is provided. For example, referring to FIG. 4, one embodiment of the joint connecting member 26 is illustrated which serves this function. The joint connecting member 26 has a first end 66 and a second end 70. A plurality of stepped passageways 74 extend longitudinally through the joint connecting member 26 for communication between the first end 66 and the second end 70. Each stepped passageway 74 has an inlet portion 78 extending inward from the first end 66 and the second end 70 and a connecting portion 82 which connects the inlet portions 78. The inlet portions 78 have a larger diameter than the connecting portion 82 providing a beveled step 86 at their intersection.

Referring to FIG. 5, a tubular connector 30, having a C-shaped cross section, is dimensioned to be received within the connecting portion 82 of the stepped passageway 74 of the joint connecting member 26 shown in FIG. 4. Means for resisting longitudinal movement of the connector 30 within the passageways 74 of the joint connecting member 26 is provided by the ends 94 of the connector 30 being flared outward to engage the beveled step 86 of the stepped passageway 74. The flared ends 94 also facilitate insertion of the conductors 22 into the connectors 30.

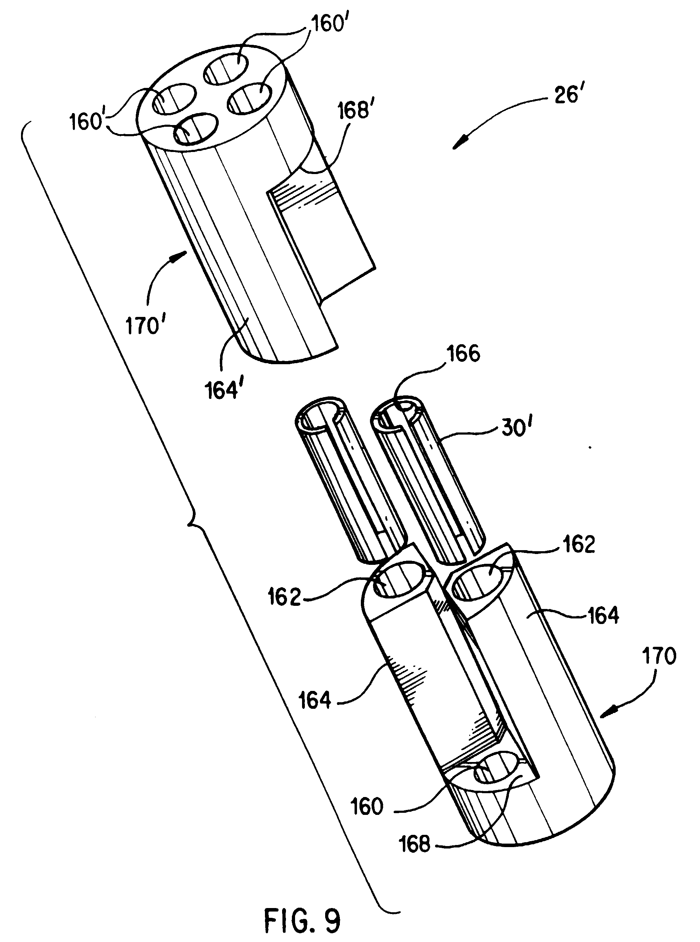

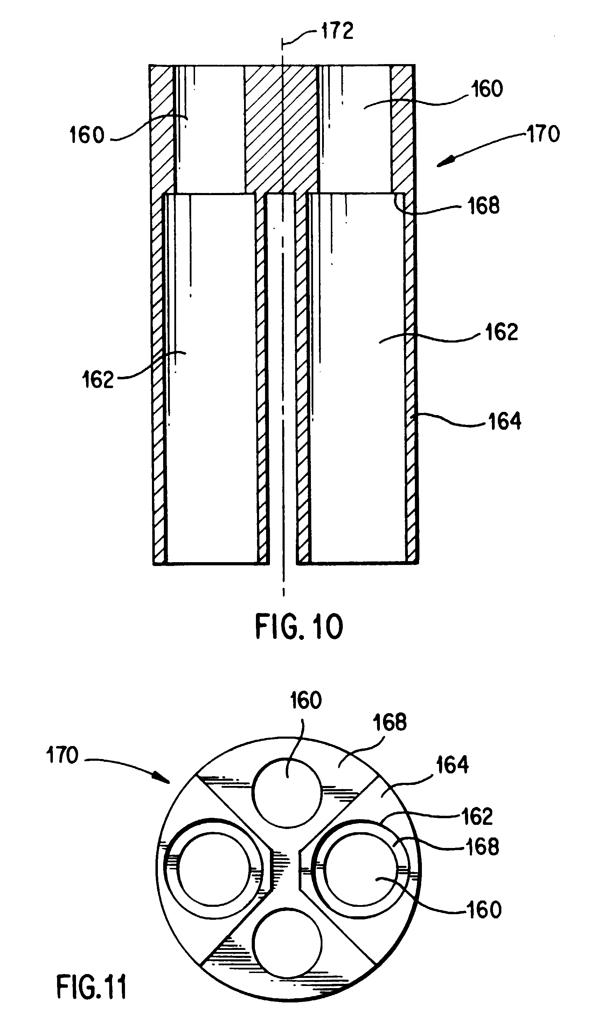

Referring to FIG. 9, FIG. 10 AND FIG. 11, an alternate embodiment 26' of a joint connecting member for connecting two adjacent sections 14 and 14', as shown in FIG. 1, is illustrated. The joint connecting member 26' includes first and second substantially identical sections, 170 and 170' respectively, which interlock together to form a substantially cylindrical member. The first section 170 is provided with four passageways 160 for closely but slidably receiving the conductors 22 shown in FIG. 1. The first section 170 further includes a pair of substantially wedge-shaped, i.e. quarter-cylindrical, extensions 164, each having a substantially cylindrical passageway 162, which is concentric with one of the passageways 160, extending therethrough. The passageways 162 are dimensioned for tightly receiving a substantially cylindrical electrical connecter 30' having a C-shaped cross-section and an inner surface 166 which is dimensioned for tightly receiving the stripped end 46, as shown in FIG. 2, of one of the conductors 22. The C-shaped cross-section of the connector 30' permits it to be compressed slightly for pressing into the passageway 162 when the joint connecting member 26 is assembled and to expand slightly, pressing it tightly against the wall of the passageway 162 when the stripped end 46 of a conductor 22 is inserted into it when two sections 14 and 14' are joined together, as indicated in FIG. 1. The connector 30' is similar to the connector 30 shown in FIG. 5 and serves the same purpose except that it does not include the flare-shaped ends 94 of the connector 30. The connectors 30' are dimensioned (lengthwise) to be completely received within the corresponding passageway 162. It will be appreciated that the outer diameter of the connector 30' is greater than the diameter of the passageways 160. Accordingly, when the substantially identical first and second sections 170 and 170' are assembled together, with the connectors 30' installed in the corresponding passageways 162 and 162', to form the joint connecting member 26', longitudinal displacement of the connectors 30' will be substantially prevented by the surfaces 168 and 168' of the sections 170 and 170', respectively, which are perpendicular to the longitudinal (cylindrical) axis 172 of the member 26'. It will be appreciated by those skilled in the art that appropriate means, not shown in the drawing figures, for securing the first and second sections 170 and 170' together to form the member 26', such as an adhesive, will be provided.

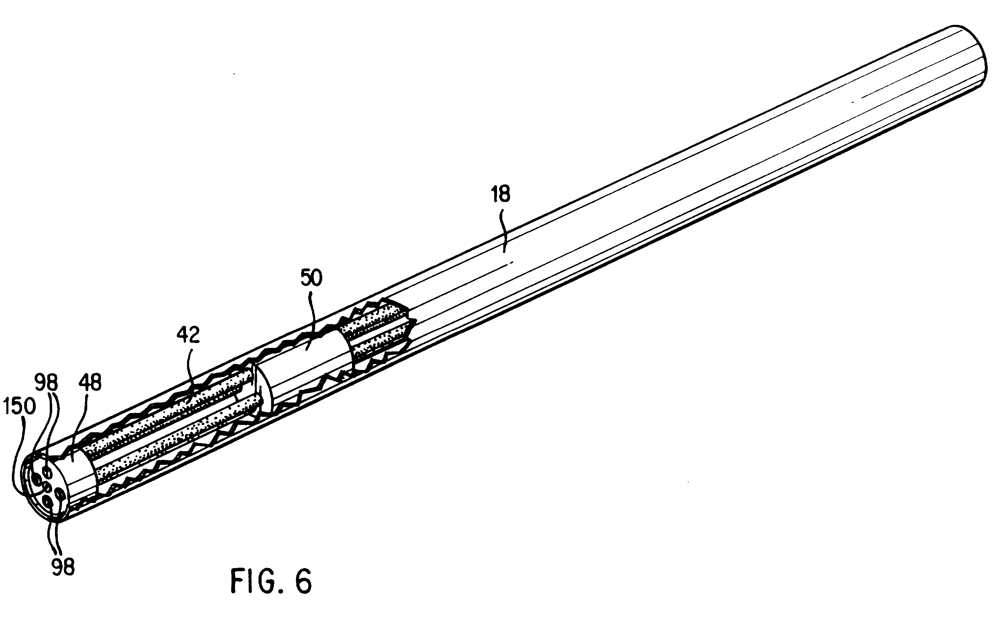

One section of an alternate embodiment of the pre-bussed rigid conduit of the present invention wherein the electrical conductors 98 are tubular is shown in FIG. 6. The enclosure 18, conductor sheaths 42, end plugs 48, and support members 50 are the same as in the preferred embodiment shown in FIG. 2.

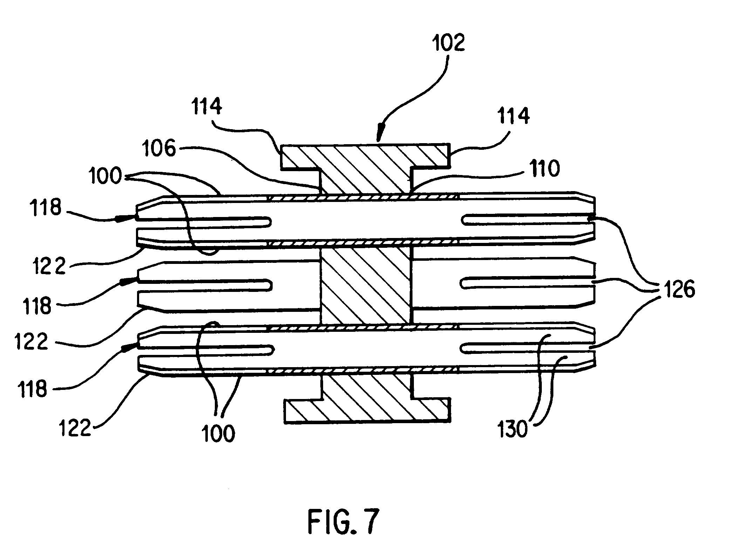

FIG. 7 shows one embodiment of a joint connecting member 102 for joining two adjacent sections of pre-bussed rigid conduit of the embodiment of the present invention illustrated in FIG. 6. The joint connecting member 102 is cylindrical in shape and molded from an electrically insulating material, such as a polymeric or thermoplastic material, and has a first end 106 and a second end 110. An outer ring 114 extends outwardly from both the first and second ends, 106 and 110, respectively. The outer rings 114 slide over the outside of the enclosure 18. A number of electrical connectors 118, generally cylindrical in shape, are molded into the joint connecting member 102. Each connector 118 extends outwardly from both ends 106 and 110 respectively of the joint connecting member 102. Each connector 118 has a beveled end 122 for easier insertion of the connector 118 into the end of the tubular conductor 98. A smooth electrical contact surface 100 engages the inside of the tubular conductors 98. Each beveled end 122 has two slots 126, one perpendicular to the other, which run longitudinally inward from the beveled end 122. The longitudinal slots 126 divide the beveled end 122 into quarters 130. The longitudinal slots 126 permit the beveled end 122 to compress slightly when the connector 118 is inserted into a corresponding tubular conductor 98.

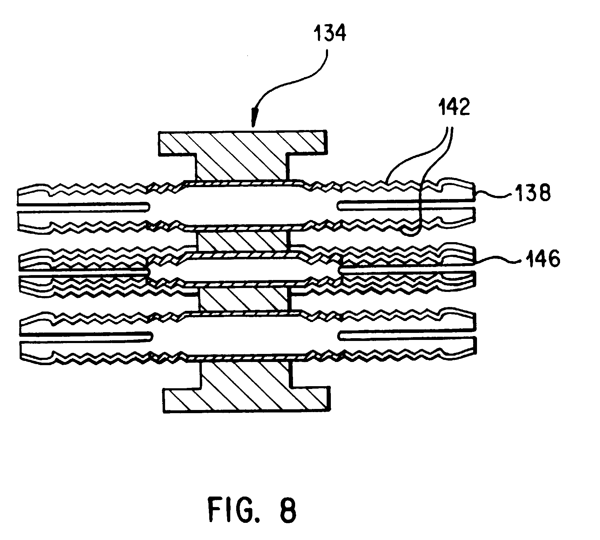

An alternate embodiment of joint connecting member 134 is shown in FIG. 8. The alternate joint connecting member 134 is similar in every respect to the joint connecting member 102 shown in FIG. 7 except that the connecters 138 have a ridged surface 142. Also shown in FIG. 8 is a ground connector 146 which is used when an internal ground conductor 150 is employed. When the internal ground conductor 150 is used, it is placed along the longitudinal axis of the enclosure 18 as shown in FIG. 6.

Although the present invention has been described in terms of specific embodiments, it is anticipated that alterations and modifications thereof will no doubt become apparent to those skilled in the art. For example, although the enclosures 18 of the preferred embodiment have been described as being similar to metallic electrical conduit, and in such embodiment the enclosure could be connected to ground and used as a neutral conductor, it will be understood that the enclosures 18 could be made of a nonconductive material and a neutral conductor, such as that indicated by the reference numeral 150 in FIG. 6 could be employed.

## Claims

1. A sectionalized electrical distribution feeder system comprising a plurality of sections of pre-bussed conduit (14) field-alterable by cutting the section (14) across its length in order to join it with an additional section (14') of the same construction; each section (14,14') comprising in combination:
a substantially rigid generally cylindrical tubular enclosure (18) extending along a longitudinal axis between a first end region and a second end region, said enclosure (18) having a uniform cross-section along its extent;
a plurality of substantially rigid electrical conductors (22, 98) within said enclosure (18), said plurality of rigid conductors (22, 98) extending from said first end region of said enclosure (18) to said second end region of said enclosure (18); each of said plurality of rigid conductors (22, 98) having a uniform cross-section along its extent;
a plurality of support members (48, 50) for supporting said plurality of conductors (22, 98) within said enclosure (18) intermediate the ends thereof in alignment with said longitudinal axis, said support members (48,50) separating said plurality of rigid conductors (22, 98) one from the other and from said enclosure (18);
one of said plurality of support members comprising an end plug (48) disposed in said substantially rigid enclosure (18) adjacent to said first end region with each said plurality of rigid conductors (22, 98) extending from said end plug (48) in said first end region;
another of said plurality of support members comprising an end plug (48) disposed in said substantially rigid enclosure (18) adjacent to said second end region with each of said plurality of rigid conductors (22, 98) extending from said end plug (48) in said second end region;
said plurality of rigid conductors (22, 98) forming a pattern that is uniform in cross-section along the length of said section (14) so that said plurality of rigid conductors (22, 98) form a pattern of connectors on each end of said section (14) and form the same pattern of connectors if said section is field-altered by cutting the section across its length, and
at least one joint connecting member (26, 102, 134) made from an electrically insulating material having a generally cylindrical shape for cooperative engagement with the enclosures (18) of the two ends of two adjacent sections (14, 14') said joint connecting member(s) (26, 102, 134) housing a plurality of electrical connectors (30, 118, 138) for providing electrical connection between the respective rigid electrical conductors (22, 98) of said two adjacent sections (14,14').

2. A system as claimed in claim 1 characterised in that said enclosure (18) is made of an electrically conductive material that can carry the system ground current.

3. A system as claimed in claim 1 or 2 characterised in that each conductor (22, 98) further comprises: an insulating sheath (42) surrounding said conductor (22, 98), said sheath (42) being selectively removable to provide a contact surface for connecting means (26, 26', 102, 102').

4. A system as claimed in any preceding claim characterised in that said support members (48, 50) are made from an electrically insulating material, each said support member (48, 50) having a generally cylindrical shape, a first end (54), a second end (58), and a plurality of passageways (62) extending longitudinally through said support member (48, 50) from the first end (54) to the second end (58) for slidably receiving said rigid conductors (22, 98), said support members (48, 50) being slidably received within said enclosure (18) at spaced apart locations between the ends of said enclosure (18).

5. A system as claimed in any preceding claim characterised by the connecting means comprising:
a joint connecting member (26) having a generally cylindrical shape of dimensions such that it can be slidably received inside said enclosure (18), a first end (66), a second end (70), and a plurality of passageways (74) extending longitudinally through said joint connecting member (26) for communicating between said first (66) and second (70) ends; and
a plurality of electrical connectors (30), each being generally tubular and being dimensioned for being closely received within said passageways (74) and having an inner diameter dimensioned to tightly receive said rigid electrical conductors (22).

6. A system as claimed in claim 5 characterised by further comprising a joint cover (34), generally tubular and cylindrical in shape and having an inner diameter dimensioned to slidably receive said enclosure (18).

7. A system as claimed in any one of claims 1 to 4 characterised in that said electrical conductors (98) are tubular.

8. A system as claimed in claim 7 characterised by:
the joint connecting member (102, 134) having a first end (106), a second end (110), and an outer ring (114) extending outwardly from said first (106) and second (110) ends, said outer ring (114) dimensioned for slidably receiving said enclosure (18), and
a plurality of electrical connectors (118, 138), each being generally cylindrical in shape, said joint connecting member (102, 134) being molded around the connectors (118, 138) whereby the connectors (118, 138) extend outwardly from said first (106) and second (110) ends of said joint connecting member (102, 134) parallel to the cylindrical axis of the joint connecting member (102, 134), each of said connectors (118, 138) being dimensioned to be slidably received in one end of a corresponding one of said tubular conductors (98).

9. A system as claimed in claim 8 characterised by further comprising a joint cover (34), generally cylindrical in shape and dimensioned to slidably fit over the outside of said enclosure (18) and said joint connecting member (102, 134); and,
means for securing said joint cover (34) to said enclosure (18).

10. A system as claimed in claim 8 or 9 characterised in that each of said connectors (118) further comprises:
a beveled end (122) for facilitating insertion of one end of said connector (118) into one end of a corresponding one of said tubular conductors (98);
a smooth electrical contact surface (100) which engages said corresponding conductor (98);
a first slot (126) running longitudinally inward from said beveled end (122); and
a second slot (126)) perpendicular to said first slot (126) running longitudinally inward from said beveled end (122), whereby said slots (126) divide said beveled end (122) into quarters and permit it to compress slightly when inserted into said tubular conductor (98).

11. A system as claimed in claim 8 or 9 characterised in that said connectors (138) have ridges (142) on said electrical contact surface.

12. A method of field altering the length of a section (14, 14') of an electrical distribution feeder system as claimed in any preceding claim, comprising the steps of;
cutting said section (14, 14') off at the required length; and,
installing a new one of said end plugs (48) at the newly cut end for supporting said electrical conductors (22, 98) and sealing said enclosure (18).

## Patentansprüche

1. Gegliedertes Speisesystem für ein elektrisches Verteilernetz mit mehreren Abschnitten, die aus vorkanalisierten Röhren (14) bestehen, die in der Strecke mittels Schneiden des Abschnitts (14) quer zu seiner Länge veränderlich sind, um ihn mit einem zusätzlichen Abschnitt (14') derselben Bauweise zu verbinden; jeder Abschnitt (14, 14') in Kombination umfassend:
- eine im wesentlichen starre und im allgemeinen zylindrische rohrförmige Hülle (18), die entlang einer Längsachse zwischen einem ersten Endbereich und einem zweiten Endbereich verläuft, wobei die Hülle (18) entlang ihrer Erstreckung einen einheitlichen Querschnitt aufweist;
- mehrere im wesentlichen starre elektrische Leiter (22, 98) innerhalb der Hülle (18), wobei die mehreren starren Leiter (22, 98) von dem ersten Endbereich der Hülle (18) bis zum zweiten Endbereich der Hülle (18) verlaufen; und wobei jeder der mehreren starren Leiter einen einheitlichen Querschnitt entlang seiner Erstreckung aufweist;
- mehrere Stützteile (48, 50) zum Abstützen der mehreren Leiter (22, 98) innerhalb der Hülle (18) zwischen deren Enden und mit der Längsachse fluchtend, wobei die Stützteile (48, 50) die mehreren starren Leiter (22, 98) untereinander sowie von der Hülle (18) trennen;
- wobei eines der mehreren Stützteile einen Endstöpsel (48) aufweist, der in der im wesentlichen starren Hülle (18) an den ersten Endbereich angrenzend angeordnet ist, wobei sich jeder der mehreren starren Leiter (22, 98) von dem Endstöpsel (48) aus in den ersten Endbereich hinein erstreckt;
- wobei ein anderes der mehreren Stützteile einen Endstöpsel (48) aufweist, der in der im wesentlichen starren Hülle (18) an den zweiten Endbereich angrenzend angeordnet ist, wobei sich jeder der mehreren starren Leiter (22, 98) von dem Endstöpsel (48) aus in den zweiten Endbereich hinein erstreckt;
- wobei die mehreren starren Leiter (22, 98) ein Muster bilden, welches entlang der Länge des Abschnitts (14) einen einheitlichen Querschnitt aufweist, so daß die mehreren starren Leiter (22, 98) an jedem Ende des Abschnitts (14) ein aus Steckverbindern bestehendes Muster bilden und dasselbe aus Steckverbindern bestehende Muster bilden, wenn der Abschnitt in der Strecke mittels Schneiden des Abschnitts quer zu seiner Länge verändert wird, und
- wenigstens ein Anschlußverbindungsstück (26, 102, 134), das aus einem elektrisch isolierenden Material hergestellt ist und im allgemeinen eine zylindrische Form zum zusammenwirkenden Eingriff in die Hüllen (18) der beiden Enden zweier benachbarter Abschnitte (14, 14') aufweist, wobei das (die) Anschlußverbindungsstück(e) (26, 102, 134) mehrere elektrische Steckverbinder (30, 118, 138) zum Gewährleisten einer elektrischen Verbindung zwischen den betreffenden starren elektrischen Leitern (22, 98) der beiden benachbarten Abschnitte (14, 14') enthält (bzw. enthalten).

2. System nach Anspruch 1,
**dadurch gekennzeichnet, daß**
die Hülle (18) aus einem elektrisch leitenden Material hergestellt ist, welches den Systemerdungsstrom führen kann.

3. System nach Anspruch 1 oder 2,
**dadurch gekennzeichnet, daß**
jeder Leiter (22, 98) des weiteren einen den Leiter (22, 98) umgebenden isolierenden Mantel (42) aufweist, wobei der Mantel (42) wahlweise entfernt werden kann, um eine Kontaktfläche für eine Verbindungseinrichtung (26, 26', 102, 102') zu schaffen.

4. System nach einem der vorangegangenen Ansprüche,
**dadurch gekennzeichnet, daß**
die Stützteile (48, 50) aus einem elektrisch isolierenden Material hergestellt sind, wobei jedes der Stützteile (48, 50) eine im allgemeinen zylindrische Form, ein erstes Ende (54), ein zweites Ende (58) und mehrere sich in Längsrichtung durch das Stützteil (48, 50) von dem ersten Ende (54) bis zum zweiten Ende (58) erstreckende Durchgangskanäle (62) zum verschiebbaren Aufnehmen der starren Leiter (22, 98) aufweist, und wobei die Stützteile (48, 50) innerhalb der Hülle (18) an voneinander beabstandeten Stellen zwischen den Enden der Hülle (18) verschiebbar aufgenommen werden.

5. System nach einem der vorangegangenen Ansprüche,
**gekennzeichnet durch**
eine Verbindungseinrichtung, die
- ein Anschlußverbindungsstück (26), das im allgemeinen eine zylindrische Form, die so bemessen ist, daß es verschiebbar innerhalb der Hülle (18) aufgenommen werden kann, ein erstes Ende (66), ein zweites Ende (70) und mehrere sich in Längsrichtung durch das Anschlußverbindungsstück (26) erstreckende Durchgangskanäle (74) zur Kommunikation zwischen dem ersten (66) und dem zweiten (70) Ende aufweist, und
- mehrere elektrische Vebindungsstücke (30) aufweist, von denen jedes im allgemeinen rohrförmig ausgebildet ist, so dimensioneiert ist, daß es eng anliegend innerhalb der Durchgangskanäle (74) aufgenommen werden kann, und einen Innendurchmesser aufweist, der so dimensioniert ist, daß er die starren elektrischen Leiter (22) fest aufnehmen kann.

6. Sysrtem nach Anspruch 5,
**dadurch gekennzeichnet, daß**
des weiteren eine Anschlußabdeckung (34) vorgesehen ist, die im allgemeinen rohrförmig ausgebildet ist, eine zylindrische Form aufweist und mit einem Innendurchmesser versehen ist, der so dimensioniert ist, daß sie die Hüllen (18) verschiebbar aufnehmen kann.

7. System nach einem der Ansprüche 1-4,
**dadurch gekennzeichnet, daß**
die elektrischen Leiter (98) rohrförmig sind.

8. System nach Anspruch 7,
**gekennzeichnet durch**
- ein Anschlußverbindungsstück (102, 134), das ein erstes Ende (106), ein zweites Ende (110) und einen sich außerhalb des ersten (106) und zweiten (110) Endes erstreckenden äußeren Ring (114) aufweist, wobei der äußere Ring (114) so dimensioniert ist, daß er die Hülle (18) verschiebbar aufnehmen kann, und
- mehrere elektrische Verbindungsstücke (118, 138), von denen jedes im allgemeinen eine zylindrische Form aufweist, wobei das Anschlußverbindungsstück (102, 134) um die Verbindungsstücke (118, 138) herumgeformt ist, wodurch sich die Verbindungsstücke (118, 138) von dem ersten (106) und zweiten (110) Ende des Anschlußverbindungsstücks (102, 134) aus nach außen und parallel zu der zylindrischen Achse des Anschlußverbindungsstücks (102, 134) erstrecken, wobei jedes der Verbindungsstücke (118, 138) so dimensioniert ist, daß es in einem Ende eines entsprechend zugehörigen rohrförmigen Leiters (98) verschiebbar aufgenommen werden kann.

9. System nach Anspruch 8,
**dadurch gekennzeichnet, daß**
- des weiteren eine Anschlußabdeckung (34), die im allgemeinen eine zylindrische Form aufweist und so dimensioniert ist, daß sie verschiebbar über die Außenseite der Hülle (18) und des Anschlußverbindungsstücks (102, 134) paßt, und
- eine Einrichtung zur Sicherung der Anschlußabdeckung (34) an der Hülle (18) vorgesehen sind.

10. System nach Anspruch 8 oder 9,
**dadurch gekennzeichnet, daß**
jedes der Verbindungsstücke (18) des weiteren
- ein abgeschrägtes Ende (122) zum Erleichtern des Einführens eines Endes des Verbindungsstücks (118) in ein Ende eines entsprechend zugehörigen rohrförmigen Leiters (98),
- eine glatte elektrische Kontaktfläche (100), die an den zugehörigen Leitern (98) angreift,
- ein erster Schlitz (126), der in Längsrichtung von dem abgeschrägten Ende (122) aus nach innen verläuft, und
- ein zweiter zu dem ersten Schlitz (126) senkrechter Schlitz (126) vorgesehen sind, der in Längsrichtung von dem abgeschrägten Ende (122) aus nach innen verläuft, wodurch die Schlitze (126) das abgeschrägte Ende (122) vierteln und es ermöglichen, daß das Ende leicht zusammengedrückt werden kann, wenn es in den rohrförmigen Leiter (98) eingeführt wird.

11. System nach Anspruch 8 oder 9,
**dadurch gekennzeichnet, daß**
die Verbindungsstücke (138) an der elektrischen Kontaktfläche Riefen (142) aufweisen.

12. Streckenänderungsverfahren zum Ändern der Länge eines Abschnitts (14, 14') eines Speisesystems eines elektrischen Verteilernetzes gemäß einem der vorangegangenen Ansprüche, das die folgenden Schritte umfaßt:
- Abschneiden des Abschnitts (14, 14') bei der erforderlichen Länge, und
- Installieren eines neuen Endstöpsels (48) an dem neu geschnittenen Ende zum Abstützen der elektrischen Leiter (22, 98) und zum Abdichten der Hülle (18).

## Revendications

1. Un système d'alimentation et de distribution électrique sous forme d'éléments assemblés, comprenant une pluralité de tronçons de conduits pré-câblés (14) modifiables sur site par sectionnement du conduit (14) en un point de sa longueur en vue de le joindre à un autre tronçon (14') de même conception, chaque tronçon (14, 14') comprenant en combinaison :
une enveloppe tubulaire (18) sensiblement cylindrique et pratiquement rigide, qui s'étend selon un axe longitudinal entre une première partie d'extrémité et une seconde partie d'extrémité, et qui présente une section transversale uniforme sur toute sa longueur ;
une pluralité de conducteurs électriques (22, 98) pratiquement rigides à l'intérieur de ladite enveloppe (18), laquelle pluralité de conducteurs rigides (22, 98) s'étend entre lesdites première et seconde parties d'extrémité de ladite enveloppe (18) ; et dont chacun des conducteurs rigides (22, 98) présente une section transversale uniforme sur toute sa longueur ;
une pluralité d'éléments de support (48, 50) destinés à assurer le maintien de ladite pluralité de conducteurs (22, 98) en alignement avec ledit axe longitudinal à l'intérieur de ladite enveloppe (18), entre les extrémités de celle-ci, lesdits éléments de support (48, 50) assurant la séparation desdits conducteurs rigides (22, 98) entre eux, et d'avec ladite enveloppe (18) ;
l'un de ladite pluralité d'éléments de support comprenant un bouchon d'extrémité (48) disposé dans ladite enveloppe pratiquement rigide (18) près de ladite première partie d'extrémité, à partir duquel se prolonge dans ladite première partie d'extrémité chacun de ladite pluralité de conducteurs rigides (22, 98) ;
un autre de ladite pluralité des éléments de support comprenant un bouchon d'extrémité (48) disposé dans ladite enveloppe pratiquement rigide (18) près de ladite seconde partie d'extrémité, à partir duquel se prolonge dans ladite seconde partie d'extrémité chacun de ladite pluralité de conducteurs rigides (22, 98) ;
ladite pluralité de conducteurs rigides (22, 98) formant une disposition qui est uniforme en section transversale sur toute la longueur dudit tronçon (14), de telle sorte que ladite pluralité de conducteurs rigides (22, 98) forme une disposition de connecteurs à chaque extrémité dudit tronçon (14) et forme la même disposition de connecteurs si ledit tronçon est modifié sur site par sectionnement du tronçon en un point de sa longueur, et
au moins un élément de raccordement (26, 102, 134) réalisé en un matériau électriquement isolant, qui présente une forme sensiblement cylindrique pour s'engager mutuellement avec les deux extrémités des enveloppes (18) de deux tronçons voisins (14, 14'), lesdits éléments de raccordement (26, 102, 134) renfermant une pluralité de connecteurs électriques (30, 118, 138) pour assurer la connection électrique entre les conducteurs électriques rigides respectifs (22, 98) desdits deux tronçons voisins (14, 14').

2. Un système selon la revendication 1, caractérisé en ce que ladite enveloppe (18) est réalisée en un matériau électriquement conducteur qui peut transporter le courant de terre du système.

3. Un système selon la revendication 1 ou 2, caractérisé en ce que chaque conducteur (22, 98) comprend en outre : une gaine isolante (42) entourant ledit conducteur (22, 98), laquelle gaine isolante (42) peut être retirée sélectivement afin de ménager une surface de contact pour les moyens de raccordement (26, 26', 102, 102').

4. Un système selon l'une quelconque des revendications précédentes, caractérisé en ce que lesdits éléments de support (48, 50) sont réalisés en matériau électriquement isolant, chacun desdits éléments de support (48, 50) ayant une forme générale cylindrique, une première extrémité (54), une seconde extrémité (58), et une pluralité de passages (62) le traversant longitudinalement de la première extrémité (54) à la seconde extrémité (58) pour recevoir par glissement lesdits conducteurs rigides (22, 98), lesdits éléments de support (48, 50) étant admis par glissement à l'intérieur de ladite enveloppe (18) en des points espacés entre les extrémités de celle-ci.

5. Un système selon l'une quelconque des revendications précédentes, caractérisé en ce que les moyens de raccordement comprennent :
un élément de raccordement (26) ayant une forme générale cylindrique de dimensions telles qu'il peut être admis par glissement à l'intérieur de ladite enveloppe (18), une première extrémité (66), une seconde extrémité (70), et une pluralité de passages (74) le traversant longitudinalement pour mettre en communication lesdites première et seconde extrémités (respectivement 66, 70) ; et
une pluralité de connecteurs électriques (30), chacun étant de forme générale tubulaire et dimensionné de telle façon qu'il soit admis intimement à l'intérieur desdits passages (74), et présentant un diamètre interne dimensionné de manière à recevoir étroitement lesdits conducteurs électriques rigides (22).

6. Un système selon la revendication 5, caractérisé en ce qu'il comprend en outre une enveloppe de raccordement (34) de forme générale tubulaire et cylindrique, et qui présente un diamètre interne dimensionné de manière à recevoir par glissement ladite enveloppe (18).

7. Un système selon la revendication 7, caractérisé en ce que lesdits conducteurs électriques (98) sont tubulaires.

8. Un système selon la revendication 7, caractérisé par :
l'élément de raccordement (102, 134) qui présente une première extrémité (106), une seconde extrémité (110), et un anneau externe (114) s'étendant vers l'extérieur à partir desdites première et seconde extrémités (106, 110), ledit anneau extérieur (114) étant dimensionné de manière à recevoir par glissement ladite enveloppe (18), et
une pluralité de connecteurs électriques (118, 138), chacun étant de forme générale cylindrique, ledit élément de raccordement (102, 134) étant moulé autour des connecteurs (118, 138) de telle sorte que ceux-ci se prolongent vers l'extérieur à partir desdites première et seconde extrémités (106, 110) dudit élément de raccordement (102, 134), parallèlement à son axe de cylindre, chacun desdits connecteurs (118, 138) étant dimensionné de manière à être reçu par glissement dans une extrémité de l'un desdits conducteurs tubulaires (98) qui lui correspond.

9. Un système selon la revendication 8, caractérisé en ce qu'il comprend en outre une enveloppe de raccordement (34) de forme générale cylindrique et dimensionné de manière à s'ajuster par glissement sur l'extérieur de ladite enveloppe (18) et dudit élément de raccordement (102, 134),
ainsi que des moyens pour fixer ladite enveloppe de raccordement (34) à ladite enveloppe (18).

10. Un système selon la revendication 8 ou 9, caractérisé en ce que chacun desdits connecteurs (118) comprend en outre :
une extrémité conique (122) pour faciliter l'insertion de son extrémité dans une extrémité de l'un desdits conducteurs tubulaires (98) qui lui correspond ;
une surface lisse de contact électrique (100) qui entre en contact avec ledit conducteur correspondant (98) ;
une première fente (126) s'étendant longitudinalement vers l'intérieur à partir de ladite extrémité conique (122) ; et
une seconde fente (126) perpendiculaire à ladite première fente (126), s'étendant longitudinalement vers l'intérieur à partir de ladite extrémité conique (122), lesdites fentes (126) divisant ainsi ladite extrémité conique (122) en quartiers et lui permettant de se comprimer légèrement lorsqu'elle est insérée dans ledit conducteur tubulaire (98).

11. Un système selon la revendication 8 ou 9, caractérisé en ce que lesdits connecteurs (138) présentent des ondulations (142) sur ladite surface de contact électrique.

12. Un procédé pour modifier la longueur d'un tronçon (14, 14') d'un système d'alimentation et de distribution électrique selon l'une quelconque des revendications précédentes, comprenant les étapes suivantes :
sectionner ledit tronçon (14, 14') à la longueur requise ; et
installer un nouveau bouchon d'extrémité (48) à l'extrémité où vient d'avoir lieu la coupe pour maintenir lesdits conducteurs électriques (22, 98) et obturer ladite enveloppe (18).
